(19) Europäisches Patentamt
European Patent Office
Office européen des brevets

(11) EP 3 944 766 A2

(12) DEMANDE DE BREVET EUROPEEN

(43) Date de publication:
02.02.2022 Bulletin 2022/05

(51) Classification Internationale des Brevets (IPC):
A23C 20/00 (2006.01) A23C 20/02 (2021.01)

(21) Numéro de dépôt: 21188654.4

(22) Date de dépôt: 30.07.2021

(52) Classification Coopérative des Brevets (CPC):
A23C 20/00; A23C 20/02; A23C 20/025

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR
Etats d'extension désignés:
BA ME
Etats de validation désignés:
KH MA MD TN

(30) Priorité: 31.07.2020 FR 2008199

(71) Demandeur: SAVENCIA SA
78220 Viroflay (FR)

(72) Inventeurs:
• DURAND, Fabien
24430 Razac sur L'Isle (FR)
• PADEL, Virginie
28170 FAVIERES (FR)
• CIBRARIO, Alice
78000 Versailles (FR)

(74) Mandataire: Gevers & Orès
Immeuble le Palatin 2
3 Cours du Triangle
CS 80165
92939 Paris La Défense Cedex (FR)

(54) **PRODUIT ALIMENTAIRE VÉGÉTAL FERMENTÉ ET SON PROCÉDÉ DE PRÉPARATION**

(57) La présente invention se rapporte à un produit alimentaire composé d'ingrédients végétaux ayant des propriétés visuelles, de texture et d'arôme d'un fromage à pâte molle fermenté.

Figure 1

EP 3 944 766 A2

**Description**

La présente invention se rapporte au domaine de l'industrie alimentaire ; elle vise plus spécifiquement la préparation d'un produit alimentaire composé d'ingrédients végétaux ayant des propriétés visuelles, de texture et d'arôme proches de celles d'un fromage à pâte molle.

Que ce soit par conviction éthique ou pour des raisons nutritionnelles, la demande en produits alimentaires végétariens voire végétaliens est en constante croissance. Il existe toutefois des produits alimentaires dont la fabrication requiert par définition l'utilisation d'ingrédients d'origine animale comme c'est le cas du lait de mammifère pour la préparation du fromage.

La Demanderesse s'est donnée pour objectif la mise au point d'un produit végétal alimentaire fermenté composés d'ingrédients végétaux compatible avec une alimentation végétalienne (« Vegan ») et se rapprochant d'un produit laitier de type fromage à pâte molle, en particulier les pâtes molles affinées de type Camembert, Brie, bûche de chèvre etc...

Les fromages sont une catégorie de produits laitiers obtenus à partir de lait liquide, milieu colloïdal composé de protéines de taille submicronique de globules gras, sucres et sels minéraux. Le lait est potentiellement enrichi de crème puis soumis à un traitement thermique (thermisation ou pasteurisation) et/ou physique (microfiltration) afin d'être coagulé par voie enzymatique (présure) et/ou microbiologique (bactéries lactiques notamment). Les produits sont ensuite démoulés et affinés afin de permettre le développement d'une flore de couverture donnant un aspect duveteux à la croûte. Optionnellement, les croûtes sont travaillées par brossage et ensemencement successifs afin d'obtenir des produits ayant des caractéristiques spécifiques telles que des croûtes colorées avec des goûts plus intenses.

Les analogues fromagers sont définis comme des produits obtenus en mélangeant différents ingrédients tels que des protéines et matières grasses, d'origine laitière ou non, et formulés de manière à répondre à un besoin fonctionnel spécifique (Bachman, H.P., 2001, « Cheese analogues : a review », International Dairy Journal, Volume 11, 505-515). Historiquement, ces produits ont plutôt été formulés dans un objectif de réduction de coût, notamment avec les fromages à pizza. Plus récemment, le segment des analogues végétaux visant à reproduire les caractéristiques d'aspect et de goût des différents fromages a connu une forte expansion commerciale, et différents produits sont disponibles sur le marché avec des stratégies de formulation variées.

On connaît par exemple les analogues végétaux obtenus en émulsionnant de la matière grasse dans une phase aqueuse contenant des amidons, comme par exemple les produits de marque Nurishh ou Green Vie. Ces produits ont une faible teneur en protéines (inférieure ou égale à 1%) et leur texturation est assurée par l'utilisation conjointe de matière grasse concrète et d'amidons modifiés ou autres additifs hydrocolloïdes. Ces produits sont acidifiés à l'aide d'acidifiants comme l'acide lactique (E270) ou citrique (E330), ou encore de régulateurs d'acidité comme le glucono-delta-lactone GDL (E575), avec utilisation optionnelle de ferments. Les produits ci-dessus ont une texture lisse car basés sur l'utilisation d'ingrédients plus ou moins purifiés sous forme de poudres de fine granulométrie qui sont réhydratées puis émulsionnées avec de la matière grasse.

Il est également possible d'utiliser des jus végétaux (de soja, lupin ou de fruits à coque) obtenus par dispersion de végétaux, qui sont coagulés par voie thermique ou enzymatique puis le caillé obtenu est découpé afin d'extraire l'eau en excès, à la manière du processus fromager classique comportant une ou plusieurs étapes de séparation entre le caillé coagulé et le sérum soluble. Un exemple de l'utilisation de ce procédé est décrit dans EP3603407 (Barbieri). Ce procédé présente deux inconvénients en termes de rendement matière : d'une part, la perte des insolubles lors de la fabrication de jus végétaux et d'autre part, la perte des solubles lors de la séparation du caillé avec le sérum. Ce procédé n'est donc pas avantageux en termes de rendement matière et génère au moins deux types de coproduits (insolubles et sérum).

Un autre mode opératoire consiste à mettre en œuvre des graines entières ou décortiquées, optionnellement traitées thermiquement, et de les broyer avant de les ensemencer avec des ferments lactiques et/ou d'affinage. Le mélange est ensuite moulé afin de permettre la prise en masse des pièces qui peuvent ensuite être démoulées puis affinées. Les graines utilisées sont de plusieurs types : soja, lupin, céréales (avoine, blé, riz), etc... L'art antérieur comporte de nombreux exemples d'application concernant le soja et en premier lieu les produits à base de soja lacto-fermenté comme le Tofu.

Ce même mode opératoire peut également être appliqué à des fruits à coque, qui ont une composition proche du soja. Parmi ces fruits à coques, la noix de cajou est particulièrement utilisée car elle peut être broyée facilement pour obtenir une pâte à l'aide d'outils simples tels que des appareils domestiques. Ceci est illustré par de nombreuses pages sur internet proposant des recettes d'analogues de fromage à base de cajou. Par exemple, le lien suivant https://www.lacuisinedannaetolivia.com propose une recette d'analogue de fromage composé à 100% de noix de cajou, https://fullofplants.com/vegan-aged-camembert-cheese propose une recette 100% noix de cajou broyée avec ferments. La noix de cajou est également à la base de nombreux analogues végétaux fromagers commerciaux tels que les produits Happy Cashew, Les Nouveaux Affineurs, Jay & Joy, etc... Ces produits contiennent une forte proportion de cajou, entre 30% et 70% et une liste d'ingrédients souvent courte (de type cajou, eau, sel, ferments). Ils sont en général obtenus par fermentation d'un broyat de noix de cajou, en général granuleux et le plus souvent sans ajout significatif d'autres ingrédients. Certains cas particuliers existent cependant : le brevet 20201281172A1 (Les Nouveaux Affineurs) enseigne de faire une première étape de broyage, d'ajouter ensuite les ferments puis de réaliser une deuxième étape de broyage. L'ajout supplémentaire de soja à la noix de cajou permet par exemple d'obtenir un produit avec une texture gélifiée, se rapprochant de celle d'un produit laitier, ce qui est exploité par la marque Les Nouveaux Affineurs. En effet, le soja est riche en protéines, qui sont connues dans l'état de l'art pour leurs propriétés texturantes.

On connaît aussi des produits contenant des mélanges de fruits à coque tels que cajou et macadamia (produit de la marque Camélia), amande et cajou (produits de la marque Jay & Joy). Marie Laforêt dans son livre « Incroyable mais VEGAN » (publié par Alternatives, 2019) propose également une recette composée majoritairement de noix de cajou associée à du jus d'amandes additionnés de ferments.

La plupart des produits existants restent néanmoins éloignés de l'univers des produits laitiers affinés : en terme d'aspect, leur couleur va du marron clair au marron foncé et la qualité de la croûte est insatisfaisante (couleur inappropriée, trop hétérogène avec une tendance au décollement) ; la texture en bouche est souvent sèche, peu fondante et granuleuse, ressemblant plus à un « pâté » qu'à des fromages laitiers onctueux et fondants ; enfin le profil organoleptique reste largement en dessous des attentes, avec des notes aromatiques ammoniaquées, levurées ou lipolysées et des saveurs acides, amères, piquant/brûlant qui ne correspondent pas au référent laitier.

Au global, l'incapacité à reproduire suffisamment fidèlement les attributs des fromages affinés explique pourquoi les analogues végétaux sont encore émergents au regard de catégories plus mâtures telles que les analogues de desserts laitiers ou encore les analogues de viandes, qui sont maintenant du domaine de la consommation de masse. C'est en particulier vrai pour les analogues végétaux de fromage pâte molle à croûte fleurie qui sont peu représentés sur le marché.

L'objectif que s'est fixé la Demanderesse est d'obtenir un analogue végétal d'un fromage à pâte molle fermenté et éventuellement affiné à partir de fruits à coque broyés, ayant un profil organoleptique se rapprochant au maximum de l'univers laitier, de par sa couleur crème et ses notes aromatiques laitières.

Par analogue végétal d'un fromage à pâte molle fermenté et éventuellement affiné, on entend un produit formulé avec des matières premières végétales se rapprochant au mieux de fromages affinés de type Camembert, Brie, bûche de chèvre sur le plan de l'aspect, de la texture et du profil organoleptique. Par fermenté, on entend un produit acidifié par voie fermentaire à l'aide de bactéries lactiques. Par affiné, on entend un produit qui présente une flore de surface. Dans ce qui suit, le produit alimentaire analogue végétal d'un fromage à pâte molle fermenté et éventuellement affiné selon l'invention est désigné « produit alimentaire végétal analogue à un fromage fermenté ».

L'obtention de tels produits pose de nombreux problèmes techniques.

Contrairement au lait, qui est un liquide, les matières végétales se présentent sous la forme de matériaux solides cohésifs souvent organisés de manière complexe avec des tissus bien différenciés ayant des fonctions biologiques spécifiques (par exemple germe et endosperme dans une céréale).

Ainsi, de par ces propriétés spécifiques, il s'avère difficile de préparer un produit alimentaire onctueux, lisse et homogène (à l'échelle inférieure au millimètre) en utilisant uniquement des particules végétales de taille supérieure au centimètre, et qui ont tendance à donner des produits pâteux et/ou granuleux. L'art antérieur propose deux types de solutions : soit la mise en œuvre de poudres fines (amidons et protéines végétales) telles que mentionnées ci-dessus, soit la mise en œuvre de matières végétales brutes broyées finement afin d'obtenir des purées, aussi appelées « pâtes », telles que des purées de fruits à coque (cajou, amande, noisette, ...) ou encore de graines telles que soja, lupin, etc... De tels ingrédients sont commercialement disponibles depuis longtemps et ont été utilisés dans la présente demande.

Une autre difficulté est de s'affranchir totalement de matières premières animales, telles que les protéines laitières ou les œufs, dont la fonctionnalité liante pourrait être mise à profit. En particulier, il est difficile de remplacer les propriétés coagulantes des caséines, qui permettent l'obtention d'un caillé qui peut ensuite être affiné.

Il est également difficile de préparer un produit fini dénué d'additifs souvent utilisés dans les produits végétaux tels qu'émulsifiants, gommes et autres hydrocolloïdes ou encore les acides et régulateurs d'acidité utilisés pour diminuer le pH des produits et améliorer leur conservation.

Une autre difficulté est d'obtenir un produit ayant une typicité laitière ou fromagère à partir de matières premières végétales, notamment la couleur blanche qui permet de rappeler l'univers du fromage. Cette difficulté peut être résolue en combinant une sélection des ingrédients avec l'adaptation du procédé de production. Concernant les ingrédients, l'utilisation de poudres blanches de type amidon, isolats purifiés de protéines végétales et l'utilisation d'huile de coco, ayant une couleur très blanche, est connue. L'utilisation de certaines purées de fruits secs, notamment l'amande émondée, particulièrement blanche, permet également d'obtenir un analogue de Fromage Affiné ressemblant optiquement à du lait. Il est également connu que l'utilisation de l'homogénéisation permet de rendre les produits alimentaires (lait, émulsions, etc..) plus blanc.

Il est enfin difficile d'obtenir un goût frais et laitier à partir de matières végétales et de conserver ce goût frais pendant toute la durée de conservation du produit car cela nécessite de maîtriser la stabilité du produit au cours de la conservation et d'éviter l'apparition de mauvais goûts ou odeurs et les évolutions de texture. Ceux-ci sont dûs à des phénomènes de dégradation de type protéolyse et lipolyse particulièrement délicats à maîtriser dans l'univers des analogues fromagers et qui apparaissent en raison de la faible quantité de sucres métabolisables par les ferments comparativement aux produits laitiers.

La Demanderesse est toutefois parvenue à mettre au point un produit alimentaire fermenté et/ou affiné entièrement végétal se rapprochant d'un produit laitier de type fromage tant au point de vue du produit (visuel, texture, arôme) avec un produit blanc aux notes de crème avec une croûte fleurie en surface, une texture de type caillé frais, que du procédé de fabrication (traitement thermique, acidification, décaillage ou non, moulage, démoulage et affinage) grâce à une combinaison de leviers formulation et procédé permettant de résoudre les problèmes techniques précités.

Avantageusement, la sélection de matières premières végétales et de ferments, combinée à un procédé de fabrication adapté permet de proposer des produits ayant un aspect caractérisé par une croûte fleurie homogène, bien fournie et de couleur blanche et un cœur de couleur jaune-crème. Elle permet également de proposer des produits ayant un comportement rhéologique proche des référents laitiers. Elle permet aussi de générer une texture en bouche humide et onctueuse, qui contraste avec les textures grasses ou sèches de certains produits de l'art antérieur, notamment à base de noix de cajou. Enfin, cette sélection permet d'obtenir un produit ayant un goût se rapprochant de l'univers sensoriel des référents laitiers.

La Demanderesse a sélectionné des purées de fruits à coque finement broyés (taille médiane des particules inférieure à 50 microns), purées qui sont essentiellement anhydres et ont une consistance fluide. De l'eau a été ajoutée à ces purées de fruits à coque, à la fois pour permettre l'activation des ferments mais aussi afin d'obtenir un produit avec une impression humide et fraiche en bouche, qui fait défaut aux produits de l'art antérieur. Cet ajout d'eau a pour conséquence une liquéfaction de la purée d'amandes, déjà fluide initialement : le mélange ainsi obtenu est très liquide, avec une viscosité proche de celle du lait. La structuration de ce mélange est donc un problème puisqu'il faut texturer le produit en quelques heures afin de le rendre démoulable et cela sans l'aide des caséines. En effet, en système laitier, la coagulation du lait se fait essentiellement par la précipitation des caséines. En l'absence de ces dernières, il est donc nécessaire de trouver une nouvelle approche pour structurer le produit afin de le rendre solide. Trois leviers ont été identifiés par la Demanderesse, ils peuvent être utilisés seuls ou en combinaison pour solutionner ce problème technique : Le premier levier de structuration consiste à utiliser une enzyme, la transglutaminase, pour générer des liaisons covalentes entre les protéines permettant la formation d'un gel. Impossible Foods dans son brevet EP2731451 évoque cette solution technique pour texturer un lait de fruits à coque mais il indique qu'il est nécessaire de s'affranchir des matières insolubles et donc de réaliser un fractionnement. Les matières insolubles citées sont des glucides qui semblent perturber l'action de la transglutaminase. De manière surprenante, la Demanderesse a réussi à texturer un mélange de fabrication à base de fruits à coque sans aucun fractionnement.

Il a également été constaté que les fruits à coque n'ont pas tous la même réactivité à la transglutaminase. L'amande est particulièrement avantageuse car elle génère un gel un peu plus ferme que d'autres fruits à coque. De plus, l'amande émondée a une couleur très blanche, ce qui est également un levier positif pour obtenir un produit qui se rapproche de l'univers laitier.

Il peut être nécessaire d'inactiver l'enzyme une fois la réaction terminée, notamment pour des raisons réglementaires. Se pose donc le problème technique des modalités d'inactivation de l'enzyme et de leur impact sur le produit fini et sa qualité. Par exemple, dans le cadre d'une inactivation par traitement thermique, il convient d'éviter toute dégradation de la couleur du produit, de sa texture et de son profil organoleptique. Le couple temps-température a donc été étudié en détail, afin d'identifier des conditions permettant d'inactiver l'enzyme sans modifier significativement le produit fini. De manière préférée, un traitement thermique à une température inférieure à 80°C a donné des résultats satisfaisants. Des exemples de réalisation sont décrits dans les Exemples 1 et 2.

Le deuxième levier de structuration consiste en l'ajout d'ingrédients texturants tels que l'utilisation de sources d'amidon. L'ajout d'amidon, associé avec un traitement thermique, permet en effet dans certaines conditions de structurer suffisamment le produit pour assurer le démoulage. Cette compensation n'est pas sans conséquence et a entraîné notamment deux nouveaux problèmes techniques, l'un du point de vue procédé et l'autre du point de vue qualité produit :

- Au niveau procédé, l'ajout d'ingrédients texturants engendre une augmentation de viscosité du mélange au moment du traitement thermique. Un phénomène de séparation de phase peut être observé sous certaines conditions rendant la fabrication impossible pour les étapes suivantes. Les paramètres de mélange (vitesse, durée), de formulation (choix des ingrédients et leurs dosages) sont donc des facteurs à maîtriser. Un autre point concerne les ingrédients de type farine qui sont des matières brutes peu raffinées et donc avec des flores indigènes relativement importantes. Du point de vue du procédé et des conditions hygiéniques, il sera important de maîtriser les conditions de traitement thermique afin d'avoir une réduction significative de la flore indigène initialement présente dans le mélange de fabrication.
- Au niveau qualité produit, l'ajout d'ingrédients texturants engendre une dégradation organoleptique du produit avec une augmentation des goûts et odeurs indésirables (carton, vert, foin, brûlé, terreux) et une perte de blancheur. En effet, outre les notes végétales et colorations classiquement plus marquées sur des ingrédients de type farine ou amidon que sur des texturants de type additifs, les teneurs incorporées pour un effet texturant similaire sont nettement plus importantes ce qui empire d'autant les défauts organoleptiques de goût et couleur. Il est alors important de choisir des ingrédients qui permettent de limiter/supprimer ces défauts. Cet ajout engendre également une plus grande évolutivité de texture au cours de la durée de vie du produit avec notamment des phénomènes de rétrogradation de l'amidon observés, synonyme de prise en fermeté au cours de la conservation à 4-6°C. De manière préférée, les sources d'amidon utilisées ont été prégélatinisées ou précuites, ce qui permet d'améliorer leur profil organoleptique (moins de notes végétales vertes et crues) et leur comportement technologique au cours du procédé. Il peut s'agir de farine de céréales, notamment riz ou farine de légumineuses telle que farine de pois chiches, lentilles, fèves, haricots blancs, pois, fèverolles etc...et encore de pseudo-céréales telles que quinoa, amarante, sarrasin. Il peut s'agir également d'amidon natif de blé, maïs ou fécule de type pomme de terre ou manioc...

Le troisième levier de structuration consiste en l'ajout de matières grasses concrètes qui va permettre une solidification du produit fini lors de la cristallisation de la matière grasse. Ce levier doit toutefois prendre en compte la solubilisation de la matière grasse concrète dans l'huile du fruit à coque, qui peut être compensée par ajout de davantage de matière grasse ou par la mise en œuvre d'un des deux autres leviers cités précédemment. Ensuite certaines matières grasses concrètes telles que les matières grasses lauriques peuvent être responsables des goûts indésirables de type vomi, savon. Il conviendra donc de maîtriser et ajuster le type de matière grasse concrète utilisée en fonction de sa composition en acides gras.

Un exemple de combinaison de ces deux derniers leviers (sources d'amidon et matière grasse concrète) a permis d'atteindre l'effet souhaité et est décrit dans l'Exemple 5. La combinaison des premier et troisième leviers (transglutaminase et matière grasse concrète) a permis d'atteindre l'effet souhaité et est décrit dans les Exemple 2 à 4.

Afin d'obtenir un produit ayant un goût se rapprochant de l'univers sensoriel des référents laitiers, La Demanderesse a également dû sélectionner des associations de ferments lactiques et éventuellement d'affinage compatibles avec les ingrédients de fabrication. Par compatibles, on entend que les ferments lactiques et d'affinage soient capables de se développer sur les ingrédients mis en œuvre. Une connaissance fine des besoins trophiques des espèces et souches est donc indispensable, associé à une connaissance fine des matières premières (teneurs en sucres, acides aminés et acides organiques). Ces interactions ont été étudiées en détail dans le cadre de la présente demande, de manière à proposer des associations souches et matières les plus adéquates. Une difficulté est de limiter les phénomènes de dégradation des protéines et de lipides au cours de l'affinage afin de conserver un produit ayant un goût se rapprochant de l'univers laitier. Ces phénomènes sont responsables de l'apparition des notes de type ammoniaque, levuré, vomi, savon... et sont liés à l'activité des ferments d'affinage. En effet, en cas de limitation de substrat carboné (type sucres ou acides organiques), les ferments d'affinage vont orienter leur métabolisme vers l'utilisation des protéines et des lipides comme sources d'énergie et on parle donc de protéolyse et lipolyse. Il conviendra de connaître et de suivre l'évolution des différents composés (sucres, acides organiques et acides aminés) au cours du procédé de fabrication.

Face à ces problématiques, des solutions sont proposées :

- D'une part, un apport suffisant en substrat carboné. Cet apport se fait grâce à la sélection et la combinaison d'ingrédients dans le mélange de fabrication. Les fruits à coque contiennent notamment des sucres dont du saccharose, en quantité faible mais qui peut s'avérer suffisante, et c'est pourquoi cette matière est d'intérêt dans le cadre de l'invention.

- D'autre part, une sélection de souches fermentaires adaptées aux matrices végétales. En effet, au sein d'une même espèce et d'un même genre, des variations importantes de besoins trophiques, de comportements lipolytiques et protéolytiques peuvent être constatés. La sélection de souches métabolisant des composants glucidiques végétaux, peu protéolytiques et peu lipolytiques est avantageuse pour acidifier le produit et pour limiter l'apparition de défauts organoleptiques au cours de la conservation.

A titre d'exemple, pour l'étape d'acidification, les ferments lactiques ont été sélectionnés d'après leur capacité à consommer et à croître sur certains sucres présents dans le domaine végétal tels que le saccharose, le glucose, le fructose, etc... et leur activité acidifiante. Celle-ci est relative à la diminution du pH qui est le reflet de la production d'acides organiques par le ferment. Les activités acidifiantes ont été étudiées par un système d'acquisition de mesure du pH en temps réel, désigné sous l'appellation système CINAC® (Spinnler H. E., Corrieu G.,1989. Automatic method to quantify starter activity based on pH measurement. Journal of Dairy Research, 56: 755-764). Les souches permettant d'acidifier un jus de fruits à coque en moins de 12h à une température comprise entre 30 et 40°C pour un pH cible inférieur à 5,2 ont été sélectionnées, elles font notamment parties des espèces de type *Streptococcus thermophilus, Lactobacillus delbrueckii, Lactococcus lactis.* De plus, cette acidification rapide et inférieure à un pH de 5,2 a pour avantage de limiter le développement des flores indigènes ayant résistées au traitement thermique appliqué aux matrices.

Au cours de cette étape de fermentation lactique, du lactate va être produit et ce dernier servira ensuite de substrat pour les ferments d'affinage. De manière avantageuse, la sélection des souches fortement acidifiantes permet également d'apporter plus d'acides organiques aux ferments d'affinage et de limiter les phénomènes de lipolyse et de protéolyse. Cette sélection est également avantageuse du point de vue de la sécurité des aliments car l'acidification rapide du produit permet de limiter le risque de contamination par des flores pathogènes.

- A titre d'exemple, pour l'étape d'affinage, les ferments ont été sélectionnés d'après leur cinétique de dégradation du lactate. Une cinétique lente sera préférée et après 8 jours d'affinage, une teneur en lactate résiduelle doit être présente dans le produit. Parmi ceux-ci, on préférera ceux ayant de faibles capacités lipolytiques et protéolytiques. Celles-ci ont été déterminées par culture des ferments sur des milieux protéiques ou lipidiques gélosés et mesure en centimètres, à intervalle de temps régulier, de la zone claire autour de la colonie traduisant la dégradation des protéines ou des lipides respectivement, par la souche. Ont été sélectionnées les ferments pour lesquels les zones claires étaient les moins étalées.

La présente invention se rapporte donc à un produit alimentaire végétal analogue à un fromage fermenté, comprenant :

- des fruits à coque broyés, de préférence sous forme de purée, additionnés de :
- au moins de la transglutaminase et/ou une source d'amidon ;
- de ferments lactiques ; et
- de l'eau ;

caractérisé en ce que il ne contient pas de soja, ni d'additif alimentaire ajouté.

Selon un mode de réalisation, ledit produit alimentaire végétal analogue à un fromage fermenté est affiné.

Selon un autre mode de réalisation, au moins une matière grasse végétale est additionnée audit produit alimentaire végétal analogue à un fromage fermenté.

En particulier, la présente invention se rapporte à un produit alimentaire végétal analogue à un fromage fermenté comprenant :

- des fruits à coques broyés, de préférence sous forme de purée et de préférence de la purée d'amandes ;

additionnés de :

- optionnellement, au moins une matière grasse végétale ;
- au moins de la transglutaminase et/ou une source d'amidon ;
- de ferments lactiques et optionnellement de ferments d'affinage ;
- optionnellement d'autres ingrédients de type arômes ou source de sucre ou de calcium ;
- de l'eau ;

caractérisé en ce qu'il ne contient aucun additif alimentaire ajouté, ni de soja ou de produit dérivé du soja et, de préférence, il ne contient pas de noix de cajou.

Par additif alimentaire, on entend une substance ajoutée aux aliments dans un but technologique : améliorer leur conservation, réduire les phénomènes d'oxydation, colorer les denrées, renforcer leur goût, etc..., il peut s'agir de colorants (incluant des agents blanchissants), de conservateurs, d'anti-oxydants, d'acidifiants/correcteurs d'acidité et d'agents de texture (stabilisant, émulsifiant, épaississant, gélifiant). L'utilisation d'additifs alimentaires est régie par le Règlement (CE) N° 1333/2008 et ces substances sont identifiées par un code au format « E » suivi d'un numéro.

De façon plus spécifique, la présente invention se rapporte à un produit alimentaire végétal analogue à un fromage fermenté préparé à partir des ingrédients suivants (pourcentages exprimés en poids par rapport au poids total du produit) :

- de 5 à 40%, de préférence environ 20%, ou encore environ 25%, de fruits à coque broyés ; de préférence, sous forme de purée et de préférence, les particules de ladite purée ont une taille inférieure ou égale à 50 $\mu$m ;
- optionnellement, jusqu'à 20% de matière grasse végétale, de préférence de 5 à 15% de matière grasse végétale ;
- jusqu'à 1,5% de préférence environ 0,5%, ou environ 1% de sel alimentaire ;
- de 0,01 à 0,5% de ferments, incluant par exemple des ferments lactiques et optionnellement des ferments d'affinage ;
- optionnellement, jusqu'à 3%, de préférence environ 1% de transglutaminase ;
- optionnellement, jusqu'à 15% d'au moins un ingrédient végétal tel qu'un concentrat ou isolat protéique végétal ou inclusions ;
- optionnellement, jusqu'à 15% d'au moins une source d'amidon ;

- optionnellement, jusqu'à 8% de fibres alimentaires végétales ;
- optionnellement, jusqu'à 5% d'autres ingrédients de types arômes, source de sucres, source de calcium ;
- de l'eau, entre 45% et 85%, de préférence 70% ou encore entre 45 et 65%.

<u>Fruits à coque</u> : le produit alimentaire selon l'invention est constitué d'une base d'un ou plusieurs fruits à coque broyés, par exemple choisis parmi : l'amande, la noisette, la noix, la noix de cajou, la noix de pécan, le pignon de pin, la noix du Brésil, la noix de Macadamia, la noix du Queensland, la noix de Nangail, ou la cacahuète, seul ou en mélange ; préférentiellement, il s'agit d'une purée de fruits à coques, tout préférentiellement, d'une purée d'amande blanche. Il faut également que cette purée soit issue d'un procédé de broyage très fin (taille médiane de particules de moins de 50 μm) et réalisé sur des fruits à coques émondés et non torréfiés. Lorsque cette purée est préparée avec des amandes, une telle purée possède une couleur particulièrement claire (par rapport aux purées d'amandes torréfiées ou aux autres purées de fruits secs) et un goût très neutre.

Selon un mode de réalisation préféré, le produit alimentaire végétal selon l'invention est préparé avec une purée d'amande blanchie avec des tailles de particules inférieure à 50 μm et permet l'obtention de texture lisse et blanche. Le choix de cette matière première est également couplé à un procédé de mélange et de cisaillement qui permet de proposer des textures lisses en bouche.

Selon la fermeté souhaitée du produit fini, la teneur en purée d'amande peut être modulée pour réduire ou augmenter l'extrait sec et la teneur en matière grasse et en protéines.

<u>Matière grasse végétale</u> : la source de matière grasse végétale solide ou liquide (qui ne prend pas en compte la matière grasse qui peut être comprise dans les autres ingrédients) est incorporée pour apporter de la fondance s'il s'agit d'huiles végétales, ou de la tenue au produit dans le cas de matière grasse solide. Outre la texture, le ratio huile liquide/matière grasse solide impacte également la composition nutritionnelle du produit et notamment la teneur en acides gras saturés.

Il peut être utilisé un mélange de différentes matières grasses végétales.

A titre d'exemple et sans caractère limitatif, les huiles peuvent provenir de tournesol, d'olive, de pépins de raisin ou encore de colza ; les matières grasses solides (aussi dites concrètes) peuvent être du beurre de cacao, du beurre de cacao désaromatisé, du beurre de karité, de l'huile de coco.

Selon un mode de réalisation particulier, on utilisera 10% de beurre de cacao.

<u>Ferments</u> : différents ferments peuvent être incorporés à la formulation et sont connus de l'Homme du métier. Il peut notamment s'agir de ferments lactiques mésophiles (*Lactococcus lactis ssp lactis* et/ou *cremoris, Lactococcus lactis ssp lactis biovar diacetylactis, Leuconostoc lactis* et/ou *Leuconostoc mesenteroides ou pseudomesenteroides*) ou thermophiles (*Streptococcus thermophilus, Lactobacillus delbrueckii ssp bulgaricus* et/ou *Lacticaseibacillus casei* et/ou *Levilactobacillus brevis* et/ou *Lacticaseibacillus rhamnosus, et/ou Lacticaseibacillus paracasei* et/ou *Lactobacillus helveticus, Lactobacillus acidophilus*), de ferments d'affinage de type *Geotrichum candidum* ou *Penicillium camemberti* et *Brevibacterium linens* ou *Hafnia alvei* ou du genre Propionibacterium ou *Pediococcus pentosaceus, Laciplantibacillus plantarum,* et enfin également des levures telles que *Kluvyeromyces lactis* ou *Debaromyces hansenii,* seules ou en mélange. On peut notamment utiliser des produits commerciaux tels que les ferments lactiques de la gamme Yoflex® (Chr Hansen).

Les ferments peuvent être soit ajoutés directement sous forme de concentrés à une teneur comprise entre 0,01 à 0,5% pendant l'ensemencement, ou bien sous la forme d'un levain composé d'une matière première végétale fermentée et d'un ou plusieurs ferments à la forme concentrée ; les ferments d'affinage peuvent être mélangés dans la masse du produit lors de sa préparation (sous forme directe ou de levain) ou pulvérisés sur le produit démoulé juste avant la phase d'affinage.

A titre d'illustration sans caractère limitatif, le produit alimentaire végétal fermenté peut-être préparé avec 0,01% de ferments lactiques (*S. thermophilus et L. bulgaricus*) et 0,1% de *Geotrichum candidum* ou encore avec 0,1% de ferment lactique (*Lactocococcus lactis*) et 0,1% de *Penicillium camembertii.*

Les ferments choisis ont de préférence les propriétés métaboliques décrites plus haut.

<u>Transglutaminase</u> : l'utilisation d'une transglutaminase permet d'avoir un produit plus ferme et fondant ; cette enzyme catalyse la formation de liaisons covalentes entre des groupes amines libres, par exemple ceux de résidus de lysine, et le groupe gamma carboxamide des résidus de glutamine, permettant ainsi la réticulation des protéines présentes dans la purée de fruits à coque ou de graines. Son utilisation est optionnelle et il est possible d'obtenir un produit selon l'invention sans avoir recours à cette enzyme coagulante. Diverses transglutaminases sont disponibles sur le marché.

<u>Ingrédient végétal</u> : un ou plusieurs ingrédients végétaux, peuvent être ajoutés :

- Des inclusions pour jouer sur des contrastes de texture (graines, inclusions de fruits ou de légumes), de couleur (herbes, aromates...) ;
- Des sources de protéines végétales telles que des concentrats ou isolats notamment de légumineuses (lentilles vertes ou rouges, haricots..) ou encore d'oléagineux (colza, tournesol, chanvre...) qui permettent de modifier le profil nutritionnel du produit fini ou encore d'apporter de la couleur.

Sources d'amidon : telles que des farines de céréales et pseudo céréales, légumineuses ou fécules et autres amidons. Ces farines contiennent une quantité importante d'amidon qui permet d'apporter des fonctionnalités au produit fini.

Comme indiqué plus haut, de manière préférée, les sources d'amidon utilisées ont été prégélatinisées ou précuites, ce qui permet d'améliorer leur profil organoleptique (moins de notes végétales vertes et crues) et leur comportement technologique au cours du procédé. Il peut s'agir de farine de céréales, notamment riz ou farine de légumineuses telle que farine de pois chiches, lentilles, fèves, haricots blancs, pois, fèverolles etc...et encore de pseudo-céréales telles que quinoa, amarante, sarrasin. Il peut s'agir également d'amidon natif de blé, maïs ou fécule de type pomme de terre ou manioc.

Fibres alimentaires végétales : il s'agit de fibres alimentaires, donc des glucides non digestibles extraits par exemple de blé, d'avoine, d'orge, de pois, de lupin, de fruits notamment pomme ou agrumes, de chicorée, de psyllium ou encore des dextrines résistantes. Les fibres alimentaires permettent d'améliorer le profil nutritionnel du produit fini et dans certains cas, de contribuer à la fermeté du produit, ou à sa texture en bouche. Les fibres alimentaires utilisables dans le cadre de l'invention sont de préférence des fibres solubles et faiblement texturantes telles que fibres de chicorée (inulines et fructooligosaccharides), dextrines résistantes ou tout autre oligosaccharide indigestible d'origine végétale, ayant un goût neutre, une solubilité élevée dans l'eau et une tendance limitée à la recristallisation. Les fibres solubles dites texturantes ou viscosifiantes peuvent également être utilisées mais à des teneurs plus faibles car peuvent donner une texture un peu trop ferme ou filante. Enfin, les fibres insolubles ou partiellement solubles peuvent également être utilisées sous réserve d'avoir une taille et forme de particules les rendant indétectables en bouche et une faible capacité de rétention d'eau ; de préférence, on utilisera les fibres solubles faiblement texturantes.

Il peut être utilisé un mélange de plusieurs fibres alimentaires végétales.

On pourra notamment ajouter de l'inuline (fibres de chicorée) dans les produits où l'on souhaite une texture fondante et onctueuse.

Le choix de la référence et de l'origine des fibres peut avoir des impacts texture et gout que l'Homme de l'art pourra ajuster selon ses objectifs et préférences.

Autres ingrédients : par autres ingrédients on entend des ingrédients utilisés à faible quantité dans le produit fini mais qui peuvent avoir un impact important sur ses propriétés et ses qualités. Par exemple, il est possible d'ajouter au moins des arômes naturels afin soit de masquer les notes aromatiques végétales indésirables ou d'augmenter la typicité du produit. Il est également possible d'ajouter une source naturelle de calcium telle que le lithothamne qui est une algue rouge connue pour sa richesse en carbonate de calcium. Enfin, il peut être souhaitable d'ajouter des sucres et ou des oligosaccharides végétaux tels que dextrose, saccharose, fructose ou encore sirop de glucose-fructose, sirop de céréales (riz, avoine, sorgho) ou encore sirop ou extraits de fruits.

Selon un mode de réalisation, le produit alimentaire végétal analogue à un fromage fermenté selon l'invention est préparé à partir des ingrédients suivants :

- de 5 à 40%, de préférence environ 20%, ou encore environ 25%, de fruits à coque broyés ; de préférence, sous forme de purée et de préférence, les particules de ladite purée ont une taille inférieure ou égale à 50 $\mu$m ;
- jusqu'à 20% de matière grasse végétale, de préférence de 5 à 15% de matière grasse végétale ;
- jusqu'à 1,5% de préférence environ 0,5%, ou environ 1% de sel alimentaire ;
- de 0,01 à 0,5% de ferments, incluant par exemple des ferments lactiques et optionnellement des ferments d'affinage ;
- jusqu'à 3%, de préférence environ 1% de transglutaminase ;
- optionnellement, jusqu'à 15% d'au moins un ingrédient végétal tel qu'un concentrat ou isolat protéique végétal ou inclusions ;
- optionnellement, jusqu'à 15% d'au moins une source d'amidon ;
- optionnellement, jusqu'à 8% de fibres alimentaires végétales ;
- optionnellement, jusqu'à 5% d'autres ingrédients de types arômes, source de sucres, source de calcium ;
- de l'eau, entre 45% et 85%, de préférence 70% ou encore entre 45 et 65%.

Selon un autre mode de réalisation, le produit alimentaire végétal analogue à un fromage fermenté selon l'invention est préparé à partir des ingrédients suivants :

- de 5 à 40%, de préférence environ 20%, ou encore environ 25%, de fruits à coque broyés ; de préférence, sous forme de purée et de préférence, les particules de ladite purée ont une taille inférieure ou égale à 50 $\mu$m ;
- optionnellement, jusqu'à 20% de matière grasse végétale, de préférence de 5 à 15% de matière grasse végétale ;
- jusqu'à 1,5% de préférence environ 0,5%, ou environ 1% de sel alimentaire ;
- de 0,01 à 0,5% de ferments, incluant par exemple des ferments lactiques et optionnellement des ferments d'affinage ;

- optionnellement, jusqu'à 15% d'au moins un ingrédient végétal tel qu'un concentrat ou isolat protéique végétal ou inclusions ;
- jusqu'à 15% d'au moins une source d'amidon ;
- optionnellement, jusqu'à 8% de fibres alimentaires végétales ;
- optionnellement, jusqu'à 5% d'autres ingrédients de types arômes, source de sucres, source de calcium ;
- de l'eau, entre 45% et 85%, de préférence 70% ou encore entre 45 et 65%.

La présente invention se rapporte ainsi à un produit alimentaire végétal analogue à un fromage fermenté comprenant (pourcentages exprimés en poids par rapport au poids total du produit) :

- de 5 à 52%, de préférence entre 5 et 30%, environ 20% ou encore 25%, de fruits à coque broyés ; de préférence, sous forme de purée et de préférence les particules de ladite purée ont une taille inférieure ou égale à 50 $\mu$m ;
- optionnellement, jusqu'à 26% d'au moins une matière grasse végétale ;
- de 0,5 à 2,5% de préférence environ 1,5%, de sel alimentaire ;
- optionnellement jusqu'à 20% d'un ingrédient végétal tel qu'un concentrat ou isolat protéique végétal ou inclusions ;
- optionnellement, jusqu'à 20% d'au moins une source d'amidon ;
- optionnellement jusqu'à 10% de fibres alimentaires végétales ;
- optionnellement, jusqu'à 7% d'autres ingrédients de types arômes, source de sucres, source de calcium ;
- de l'eau, entre 35% et 75%, de préférence 70% ou encore entre 45 et 65%.

Tableau 1 : Caractérisation nutritionnelle du produit fermenté selon l'invention

| Teneur pour 100g | |
| --- | --- |
| Extrait sec | 25-65 |
| Protéines | 1-20 |
| Glucides | 0,5-20 |
| Lipides | 3-40 |
| Fibres | 0,5-10 |

Ce produit se caractérise par des caractéristiques d'un produit laitier en particulier, un aspect rappelant l'univers laitier avec flore de surface bien blanche et une pâte blanche à beige, une fermeté proche de l'univers laitier et des notes aromatiques fraiches et peu végétales.

Des analyses de couleurs de pâte ont été réalisées en comparaison à des fromages à pâte molle affinés du commerce et sont reportés à l'Exemple 6.

Des analyses rhéologiques ont également été réalisées et sont reportées à l'Exemple 7.

Une comparaison sensorielle a également été menée et est reportée à l'Exemple 8. Les produits de l'invention se caractérisent avec une intensité globale plus faible que les produits de la concurrence. Ils sont moins fromager/lipolysé, moins fermenté/levuré, moins affiné, moins acide et plus laitier.

Avantageusement, ce produit est composé d'ingrédients végétaux et convient ainsi aux personnes suivant un régime végétarien ou végétalien. Par ailleurs, il ne contient pas de produit dérivé du lait, tels que protéines et lactose et convient donc aux consommateurs allergiques ou intolérants au lait. Ce produit contient moins d'acides gras saturés qu'un produit laitier et ne contient pas de cholestérol ; il ne contient pas de conservateur (tel que le sorbate de potassium), ni d'additif alimentaire. Sa valeur énergétique est inférieure à celles des pâtes molles traditionnelles. En outre, ce produit présente des bonnes qualités organoleptiques comme illustré dans les exemples qui suivent.

Le produit alimentaire végétal analogue à un fromage affiné selon l'invention peut être préparé selon le procédé suivant (aussi représenté dans le tableau 2) :

A) mélange des ingrédients et obtention d'un mix pompable ;

Cette étape a pour but de préparer un mélange des différents ingrédients à l'exclusion des ferments (*par exemple* eau, purée de fruits à coque, matière grasse, sel, ingrédients végétaux (farines, concentrats, isolats, source d'amidon), fibres végétales et autres ingrédients (arômes, source de sucres..), l'ensemble de ces ingrédients étant tels que défini plus haut) de manière à obtenir une suspension globalement liquide ; elle peut être conduite à une température comprise entre 20 et 70°C, pendant 10 à 30 minutes et sous un cisaillement modéré à élevé et être réalisée à la main, au batteur, mélangeur dynamique ou encore au cuiseur.

Selon un mode de réalisation préféré, cette étape de mélange est réalisée avec un cuiseur, pendant 10 minutes à 50°C sous cisaillement modéré puis 1 min à fort cisaillement.

B) optionnellement, homogénéisation du mélange obtenu à l'étape A) ;

Cette étape a pour but de réduire la taille de particules, permettant ainsi d'améliorer la fermeté des produits à l'aide d'un mélangeur fortement cisaillant (ultra-turrax, moulin colloïdal, etc..) ou d'un homogénéisateur à contre-pression, opérant dans une plage de pression comprise entre 50 et 600 bars.

C) chauffage entre 75°C et 100°C pendant 5 à 30 minutes, de préférence, à environ 80°C pendant 20 minutes ou encore à environ 85°C pendant 20 minutes ;

Cette étape permet la sanitation (élimination de microorganismes indésirables) du mélange de fabrication pour sa conservation ; elle conduit également à une dénaturation des protéines végétales favorable à l'action de la transglutaminase lorsqu'elle est présente et à la fonctionnalisation des ingrédients notamment pour les ingrédients sources d'amidon.

D) refroidissement jusqu'à atteindre une température d'environ 40°C, préférentiellement entre 35 et 45°C ;

E) ensemencement des ferments sous forme concentrée et/ou de levain et optionnellement de transglutaminase sous agitation afin de permettre leur bonne répartition au sein du mélange ;

F) optionnellement, coagulation ;

Dans le cas où une transglutaminase a été incorporée au mélange, le maintien à une température abaissée (entre 30 et 60°C) peut être prolongé jusqu'à 3h30 pour permettre l'action enzymatique de la transglutaminase ; de préférence, l'action de la transglutaminase, qui permet la formation d'un gel favorisant le tranchage du produit fini, est permise par un maintien à environ 40°C pendant environ 1h30.

G) décaillage optionnel suivi d'un moulage ;

Cette étape permet de donner une forme au produit ; elle peut être conduite par moulage après décaillage ou moulage directement ;

H) acidification par voie fermentaire pendant 7 à 20h à environ 30°C, de préférence à une température comprise entre 30 et 45°C et encore plus préférentiellement 16 à 20h à 37°C, jusqu'à atteindre un pH compris entre 5,2 et 4,5 et de préférence entre 5,2 et 4,2 ;

Cette étape se fait spontanément par action des ferments lactiques tels que ceux utilisés lors de la fabrication de yaourt ou tout autre ferment d'ensemencement connu de l'Homme de l'art. De façon préférée, le ferment lactique est un ferment lactique de type Yoflex® (Chr. Hansen) ou autre (à 0,01%), l'acidification dure alors environ 7h et permet d'atteindre un pH d'environ 5,2.

Cette étape permet également d'apporter une note aromatique ou de renforcer la texture via la fermentation ; à titre d'exemple, les ferments peuvent être *Lactococcus lactis, Pediococcus pentosaceus, Lactobacillus plantarum* ou les bactéries propioniques ou encore les levures.

I) optionnellement, un traitement thermique afin d'inactiver la transglutaminase.

La température au cœur du produit doit être inférieure à 90°C et manière préférentielle entre 70 et 80°C.

J) démoulage ;

K) optionnellement, une pulvérisation des ferments d'affinage ;

L) optionnellement, salage à sec ;

M) optionnellement, affinage ;

C'est à dire développement d'une flore de surface (*Geotrichum, Penicillium*), bien blanche, rase, peu aromatique, stable dans le temps. Cette étape se fait à froid (3-12°C) pendant 3 à 20 jours jusqu'à l'obtention d'une croûte bien fleurie. Préférentiellement, elle est réalisée avec 0,1% de *Geotrichum candidum* pendant 10 jours à 8°C.

N) conservation entre 4 et 10°C.

La conservation du produit fini peut être réalisée dans tout emballage classiquement utilisé pour les produits laitiers.

Tableau 2

| | Etape unitaire | Intérêt | Valeurs testées | Valeur préférentielle mise en œuvre dans la partie expérimentale |
|---|---|---|---|---|
| A | Mélange des ingrédients et obtention d'un mix pompable | Mélanger les différents ingrédients de manière à obtenir une suspension globalement liquide | Température de mélange entre 20 et 70°C Temps de mélange entre 10 et 30 min Vitesse 200 et 10000 rpm | Cuiseur, mélange 10 min à 50°C à 1500 rpm |

(suite)

| | Etape unitaire | Intérêt | Valeurs testées | Valeur préférentielle mise en œuvre dans la partie expérimentale |
|---|---|---|---|---|
| B | Homogénéisation (étape optionnelle) | Emulsion stable, réduction taille de particules pour texture lisse et enfin, levier de texturation | 50 à 600 bars | 300 - 500 bars |
| C | Traitement thermique | Sanitation du mix de fabrication pour la conservation Dénaturation des protéines d'amandes pour permettre à la transglutaminase d'agir Fonctionnalisation sources d'amidon | 75°C à 90°C 5 à 30 min | 85°C /20 min |
| D | Refroidissement | Atteindre une température acceptable pour l'ajout des ferments | 35-50°C | autour de 40°C |
| E | Ensemencement (ferments et/ou levains, et ou/ l'agent de coagulation) | Ajout des ferments et optionnellement de la transglutaminase | Ferments : 0,01 - 0,5% Transglutaminase: 0-3% | |
| F | Coagulation par la transglutaminase (étape optionnelle) | Création d'un gel afin de pouvoir le trancher | Température entre 30°C à 60°C jusqu'à 3h30 | 1%, lh30 à 40°C |
| G | Décaillage optionnel et Moulage | Donner une forme au produit | | |
| H | Acidification | Hygiène et Sécurité | pH bas compris entre 5,2 et 4,2 Acidification de 7 h et 20h à une température d'environ 30°C | 16 à 20h à 37°C |
| I | Traitement thermique du produit fini (étape optionnelle) | Inactivation de la transglutaminase, | < 90°C à coeur | Entre 70 et 80°C |
| J | Démoulage | | 4-15°C | 10°C |
| K | Pulvérisation ferments de couverture (étape optionnelle) | | | |
| L | Salage à sec (étape optionnelle) | | | |
| M | Affinage (étape optionnelle) | Développement d'une fleur de surface bien blanche, rase, peu aromatique, stable dans le temps | Température comprise entre 4 et 15°C Durée de 3 à 20J | 10J à 8°C |
| N | Stockage | Conservation | | 4°C |

FIGURES :

La figure 1 représente le produit selon l'invention obtenu à l'issue de l'exemple 2.

La figure 2 représente le produit selon l'invention obtenu à l'issue de l'exemple 3.

La figure 3 représente présente les valeurs de dE moyen obtenus pour les produits de l'invention et des produits laitiers de type pâte molle du commerce.

La figure 4 représente les valeurs du module de Young d'une sélection de fromages laitiers fermentés et affinés et de produits selon l'invention.

La figure 5 représente la carte des produits résultant de l'évaluation sensorielle.

La figure 6 représente la carte des descripteurs sensoriels.

La figure 7 représente les résultats de l'évaluation sensorielle des produits de l'invention et de produits du commerce.

EXEMPLES

Exemple 1 : dans cet exemple, le produit selon l'invention est préparé avec 30% purée amandes, 5% huile de colza, 5% farine de blé, 0,5% NaCl, 0,01% de ferments commerciaux de type Yoflex® (Chr. Hansen), 0,1% de *Geotrichum candidum,* 1% de transglutaminase et de l'eau qsp 100%.

Les étapes mises en œuvre sont les suivantes : A-C-D-E-F-G-H-I-J-K-L-M-N (voir le tableau 2)

On obtient un produit fini ayant l'aspect d'une pâte molle laitière, avec une croûte fleurie bien blanche et un cœur homogène et lisse, ayant une texture fondante.

Le produit a un pH de 4,6 et peut être conservé plusieurs semaines à une température de 4 à 10°C sans montrer d'évolution notable en termes de texture ou de goût ni d'équilibre de flore.

Les valeurs nutritionnelles du produit de l'Exemple 1 sont indiquées ci-dessous :

Tableau 3

| Teneur pour 100g | |
|---|---|
| Energie (kcal) | 247 |
| Extrait sec | 45 |
| Protéines | 8 |
| Glucides | 6 |
| Dont sucres | 1,3 |
| Lipides | 21 |
| Fibres | 3 |

Exemple 2 : Produit préparé avec 10% purée amandes, 10% de beurre de cacao, 10% isolat de protéines de pois, 0,5% NaCl, 0,01% de ferments commerciaux de type Yoflex® (Chr.Hansen), 0,1% de *Geotrichum candidum,* 1% de transglutaminase et de l'eau qsp 100%. Les étapes mises en œuvre sont les suivantes : A-C-D-E-F-G-H-I-J-K-M-N (voir le tableau 2).

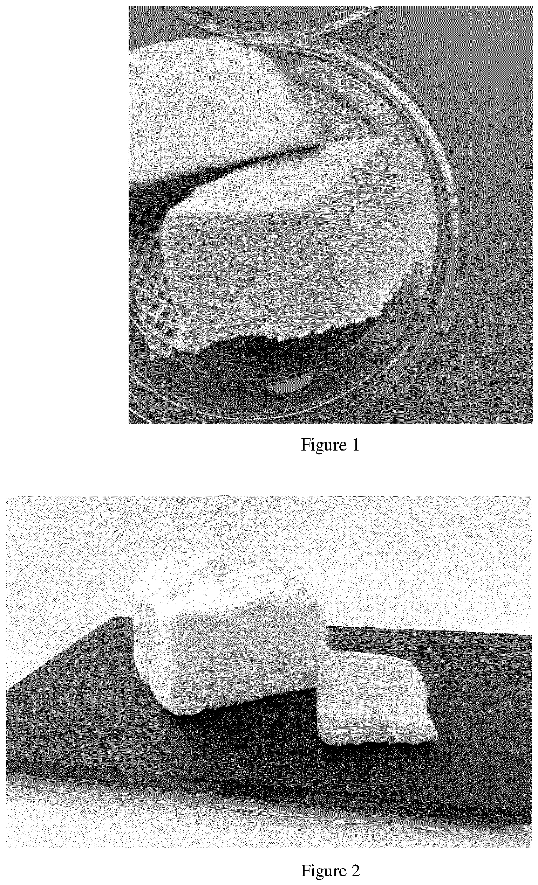

Le produit de l'Exemple 2 a une texture plus ferme que le produit de l'Exemple 1 et légèrement plus sèche en bouche. La couleur est également légèrement plus foncée du fait de l'ajout des protéines de pois et le goût est légèrement plus typé (voir figure 1).

Le profil nutritionnel est également modifié ainsi que montré dans le tableau suivant :

Tableau 4

| Teneur pour 100g | |
|---|---|
| Energie (kcal) | 249 |
| Extrait sec | 40 |
| Protéines | 12 |
| Glucides | 1,1 |
| Dont sucres | 0,6 |
| Lipides | 20,5 |
| Fibres | 1,7 |

Exemple 3 : Produit préparé avec 20% purée amandes, 10% de beurre de cacao, 0,5% NaCl, 0,01% de ferments commerciaux de type Yoflex® (Chr. Hansen), 0,1% de *Geotrichum candidum,* 1% de transglutaminase et de l'eau qsp 100%.

Les étapes mises en œuvre sont les suivantes : A-C-D-E-F-G-H-I-J-K-M-N (voir le tableau 2)

On obtient un produit fini avec une texture fraiche, fondante, un cœur crayeux bien blanc ayant l'aspect d'une pâte molle laitière, avec une croûte fleurie bien blanche. Le produit a un pH de 4.6 et peut être conservée plusieurs semaines à une température de 4 à 10°C sans montrer d'évolution notable en termes de texture ou de goût ni d'équilibre de flore (voir figure 2)

Les valeurs nutritionnelles du produit de l'Exemple 3 sont indiquées ci-dessous :

Tableau 5

| Teneur pour 100g | |
| --- | --- |
| Energie (kcal) | 280 |
| Extrait sec | 40 |
| Protéines | 5,6 |
| Glucides | 2,1 |
| Dont sucres | 1,3 |
| Lipides | 27 |
| Fibres | 2,7 |

Exemple 4 : Produit composé de 20% purée amandes, 10% de beurre de cacao, 1% sirop de glucose, 0,5% NaCl, 0,1% de ferments lactiques commerciaux, 0,1% de *Penicillium camembertii* , 1% de transglutaminase et de l'eau qsp 100%.

Les étapes mises en œuvre sont les suivantes (voir le tableau 2) :
A-C-D-E-G sans décaillage-H-I-J-K-M-N

Le mix est directement moulé en pots, la coagulation se fait en même temps que l'acidification au cours de l'étape H, cette étape est menée de 16 à 20h à 30°C

On obtient un produit fini avec une texture plus homogène, plus lisse et gel ayant l'aspect d'une pâte molle laitière, avec une croûte fleurie bien blanche, bien duveteuse avec une légère note de champignon. Le produit a un pH de 4.6 et peut être conservée plusieurs semaines à une température de 4 à 10°C sans montrer d'évolution notable en termes de texture ou de goût ni d'équilibre de flore.

Les valeurs nutritionnelles du produit de l'Exemple 4 sont indiquées ci-dessous :

Tableau 6

| Teneur pour 100g | |
| --- | --- |
| Energie (kcal) | 212 |
| Extrait sec | 35 |
| Protéines | 4,2 |
| Glucides | 2,5 |
| Dont sucres | 2 |
| Lipides | 21 |
| Fibres | 2,0 |

Exemple 5 : Produit composé de 22% purée amandes, 10% beurre de cacao, 5% farine de riz, 5% fécule de pomme de terre 1 % NaCl, acidification par ferments commerciaux, 0.1% *Geotrichum candidum* et de l'eau qsp 100%.

Le procédé retenu pour l'exemple comprend les étapes suivantes (voir le tableau 2) : A-C-D-E-G sans décaillage-H-J-M-N

On obtient un produit fini ayant l'aspect d'un produit laitier affiné, avec une croûte blanche et un cœur ferme et fondant, tranchable, une pâte de couleur beige. Le produit a un pH de 4.5 et peut être conservée plusieurs semaines à une température de 4 à 10°C sans montrer d'évolution notable en termes de texture ou de goût ni d'équilibre de flore.

Les valeurs nutritionnelles du produit de l'Exemple 5 sont indiquées ci-dessous :

Tableau 7

| Teneur pour 100g | |
|---|---|
| Energie (kcal) | 250 |
| Extrait sec | 45 |
| Protéines | 5 |
| Glucides | 9 |
| Dont sucres | 1.3 |
| Lipides | 22 |
| Fibres | 2 |

Exemple 6 :

Des analyses de colorimétrie CIELAB ont été réalisées sur des produits pâte molle laitière du commerce et sur certains exemples reliés à notre invention. La mesure a été réalisée uniquement sur le cœur du produit (la pâte).

CIE Lab (plus exactement L*a*b*) est un modèle de représentation des couleurs développé en 1976 par la Commission internationale de l'éclairage (CIE). Comme l'ensemble des dispositifs issus du dispositif CIE XYZ, il caractérise une couleur avec un paramètre d'intensité correspondant à la luminance et de deux paramètres de chrominance qui décrivent la couleur. Il a été particulièrement étudié pour que les distances calculées entre couleurs correspondent aux différences perçues par l'œil humain.

La combinaison L* est la clarté, qui va de 0 (noir) à 100 (blanc).

La composante a* représente la gamme de l'axe rouge (valeur positive) → vert (négative) en passant par le blanc (0) si la clarté vaut 100.

La composante b* représente la gamme de l'axe jaune (valeur positive) → bleu (négative) en passant par le blanc (0) si la clarté vaut 100.

Le modèle de couleur L*a*b* a été créé comme un modèle absolu, indépendant du matériel, utilisable comme référence théorique. Le critère dE a été suivi, il s'agit d'un calcul qui mesure l'écart par rapport au blanc (Colour in Food: Improving Quality, publié par D MacDougall en 2002) selon l'équation suivante :

$$\Delta E^* = [(\Delta L^*)^2 + (\Delta a^*)^2 + (\Delta Lb^*)^2]^{1/2}$$

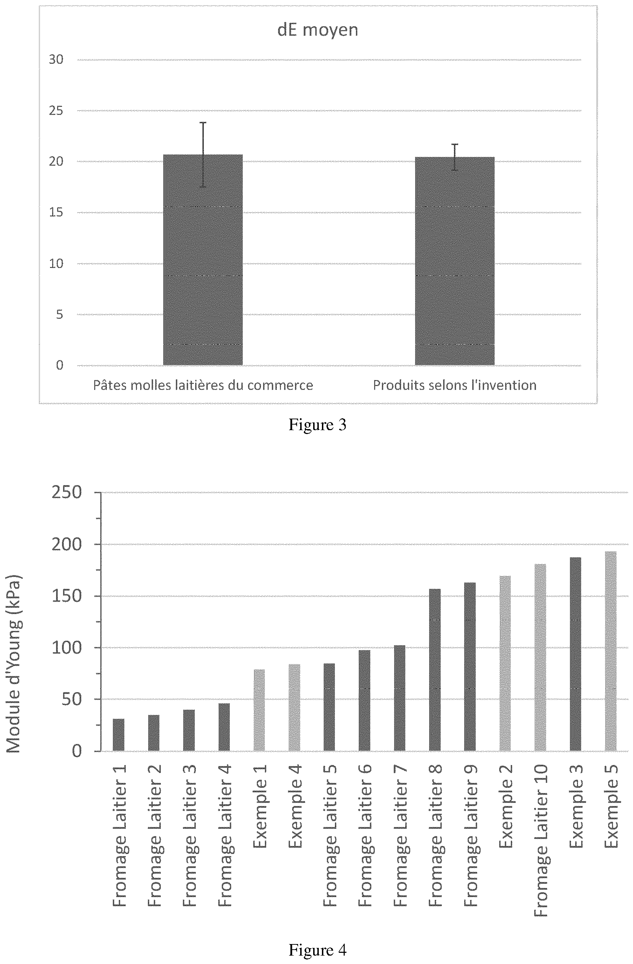

La figure 3 présente les valeurs de dE moyen obtenus pour les produits de l'invention et des produits laitiers de type pâte molle du commerce ; elle montre que les produits de l'invention sont dans l'univers de couleurs des produits laitiers de type pâte molle du commerce avec un dE moyen de l'ordre de 20.

Exemple 7 :

La caractérisation rhéologique des fromages a été réalisée à l'aide d'une machine universelle de traction-compression de marque Instron. Les produits sont placés sur un plan et leur diamètre initial est mesuré. Ils sont soumis à une compression uniaxiale par un plateau dont le diamètre est supérieur à celui du fromage. Le plateau descend à une vitesse constante de 30 mm/min jusqu'à un déplacement correspondant à 15% de la hauteur initiale du produit. La force résistante, normalisée par le diamètre initial du fromage, est homogène à une contrainte apparente (en kPa). Le déplacement du plateau après contact, rapporté à la hauteur initiale, est homogène à une déformation apparente (sans unités). La contrainte apparente varie d'abord linéairement avec la déformation apparente. La pente (donc le rapport entre contrainte et déformation apparentes) correspond au module d'Young apparent (noté E, en kPa), qui est un indicateur de fermeté du produit.

Ce test a été mené sur une sélection de fromages laitiers fermentés et affinés (de type Camembert, fromages de chèvre, etc...) et sur quelques produits selon l'invention. Les valeurs de module d'Young obtenues sont montrées sur la Figure 4.

Les valeurs obtenues pour les produits des différents Exemples sont du même ordre de grandeur que celle de différents fromages laitiers. La combinaison des différents leviers techniques décrits plus haut permet donc de générer un espace produit reproduisant les attributs rhéologiques de différents fromages laitiers fermentés et/ou affinés.

Exemple 8 :

Une évaluation sensorielle a été menée sur certains exemples de l'invention face à des produits VEGAN affinés du commerce. Les produits illustrant les exemples 2 - 4 et 5 ont été évalués face à des produits du commerce nommés concurrent B, L, R, N, V. L'évaluation s'est déroulée en comparatif, sur des produits présentés de façon anonyme à l'aide de code à 3 chiffres, le produit est évalué en entier c'est-à-dire un morceau comprenant à la fois la pâte et la croûte.

Le jury était constitué de 8 participants entraînés à la méthode descriptive (Profil sensoriel / QDA *Quantitive Descriptive Analysis*) et à l'évaluation de produits végétaux.

Une dizaine de descripteurs ont été évalués, parmi lesquels : Intensité globale, Laitier, Fromager/Lipolysé, Levuré/fermenté, Affiné et Acide.

Les produits étaient notés sur une échelle discontinue en 6 points (de 0 = absence à 5 = très forte perception).

Les résultats sont présentés sous forme d'une ACP (*Analyse en composantes principales*) qui permet de synthétiser les différences sensorielles observées. L'ACP se présente sous forme de 2 graphiques à interpréter simultanément.

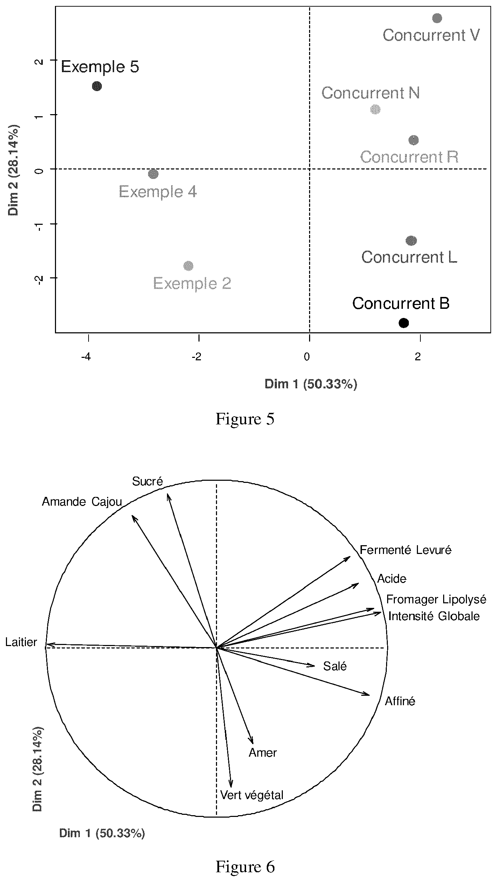

**La carte des produits** indique les proximités sensorielles entre produits et **la carte des descripteurs** permet de les interpréter : un produit se trouve dans la direction des descripteurs pour lesquels il possède de fortes valeurs, relativement aux autres produits présents sur la carte (voir figures 5 et 6).

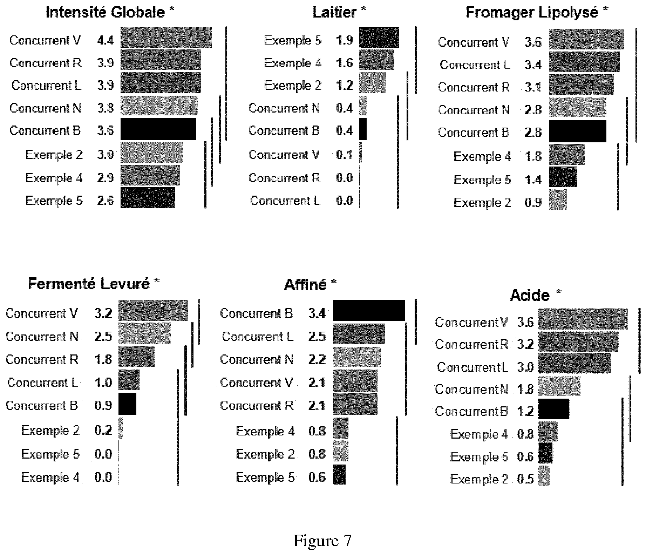

A l'issue de l'évaluation sensorielle, les produits de l'invention ressortent avec une intensité globale plus faible que les produits de la concurrence. Ils sont moins fromager/lipolysé, moins fermenté/levuré, moins affiné, moins acide et plus laitier (figure 7).

## Revendications

**1.** Produit alimentaire végétal analogue à un fromage fermenté, comprenant :

- des fruits à coque broyés, de préférence sous forme de purée, additionnés de :
- au moins de la transglutaminase et/ou une source d'amidon ;
- des ferments lactiques ; et
- de l'eau ;

**caractérisé en ce que** il ne contient pas de soja, ni d'additif alimentaire ajouté.

**2.** Produit alimentaire végétal selon la revendication 1 en ce qu'il est affiné.

**3.** Produit alimentaire végétal selon la revendication 1 ou 2, auquel au moins une matière grasse végétale est additionnée

**4.** Produit alimentaire végétal selon l'une quelconque des revendications 1 à 3 préparé à partir des ingrédients suivants (pourcentages exprimés en poids par rapport au poids total du produit) :

- de 5 à 40% de fruits à coque broyés ; les particules de fruits à coque ont une taille inférieure ou égale à 50 $\mu$m ;
- optionnellement, jusqu'à 20% de matière grasse végétale ;
- jusqu'à 1,5% de sel alimentaire ;
- de 0,01 à 0,5% de ferments lactiques et optionnellement des ferments d'affinage ;
- optionnellement jusqu'à 3% de transglutaminase ;
- optionnellement jusqu'à 15% d'un ingrédient végétal tel qu'un concentrat ou isolat protéique végétal ou inclusions ;
- optionnellement, jusqu'à 15% d'au moins une source d'amidon;
- optionnellement jusqu'à 8% de fibres alimentaires végétales ;
- optionnellement jusqu'à 5% d'autres ingrédients de types arômes, source de sucre ou de calcium ;
- entre 45% et 85% d'eau.

**5.** Produit alimentaire végétal selon l'une quelconque des revendications 1 à 4 préparé à partir des ingrédients suivants (pourcentages exprimés en poids par rapport au poids total du produit) :

- de 5 à 40% de fruits à coque broyés ; les particules de fruits à coque ont une taille inférieure ou égale à 50 $\mu$m ;
- jusqu'à 20% de matière grasse végétale ;

- jusqu'à 1,5% de sel alimentaire ;
- de 0,01 à 0,5% de ferments lactiques et optionnellement des ferments d'affinage ;
- jusqu'à 3% de transglutaminase ;
- optionnellement, jusqu'à 15% d'au moins un ingrédient végétal tel qu'un concentrat ou isolat protéique végétal ou inclusions ;
- optionnellement, jusqu'à 15% d'au moins une source d'amidon ;
- optionnellement, jusqu'à 8% de fibres alimentaires végétales ;
- optionnellement, jusqu'à 5% d'autres ingrédients de types arômes, source de sucres, source de calcium ;
- entre 45% et 85% d'eau.

6. Produit alimentaire végétal selon l'une quelconque des revendications 1 à 4 préparé à partir des ingrédients suivants (pourcentages exprimés en poids par rapport au poids total du produit) :

- de 5 à 40% de fruits à coque broyés ; les particules de fruits à coque ont une taille inférieure ou égale à 50 $\mu$m ;
- optionnellement, jusqu'à 20% de matière grasse végétale ;
- jusqu'à 1,5% de sel alimentaire ;
- de 0,01 à 0,5% de ferments lactiques et optionnellement des ferments d'affinage ;
- optionnellement, jusqu'à 15% d'au moins un ingrédient végétal tel qu'un concentrat ou isolat protéique végétal ou inclusions ;
- jusqu'à 15% d'au moins une source d'amidon ;
- optionnellement, jusqu'à 8% de fibres alimentaires végétales ;
- optionnellement, jusqu'à 5% d'autres ingrédients de types arômes, source de sucres, source de calcium ;
- entre 45% et 85% d'eau.

7. Produit alimentaire végétal selon l'une quelconque des revendications 1 à 6 comprenant (pourcentages exprimés en poids par rapport au poids total du produit) :

- de 5 à 52% de fruits à coque broyés ; les particules de fruits à coque ont une taille inférieure ou égale à 50 $\mu$m ;
- optionnellement, jusqu'à 26% de matière grasse végétale;
- de 0,5 à 2,5% de sel alimentaire ;
- optionnellement jusqu'à 20% d'un ingrédient végétal tel qu'un concentrat ou isolat protéique végétal ou inclusions ;
- optionnellement, jusqu'à 20% d'au moins une source d'amidon;
- optionnellement jusqu'à 10% de fibres alimentaires végétales ;
- optionnellement jusqu'à 7% d'autres ingrédients de types arômes, source de sucre ou de calcium
- entre 35% et 75% d'eau.

8. Produit alimentaire végétal selon l'une quelconque des revendications 1 à 7, **caractérisé par** la composition nutritionnelle suivante :

| Teneur pour 100g | |
| --- | --- |
| Extrait sec | 25-65 |
| Protéines | 1-20 |
| Glucides | 0,5-20 |
| Lipides | 3-40 |
| Fibres | 0,5-10 |

9. Procédé de préparation du produit alimentaire végétal selon l'une quelconque des revendications 1 à 8, comprenant les étapes de :

A) mélange des ingrédients et obtention d'un mix pompable ;
B) optionnellement, homogénéisation du mélange obtenu à l'étape A) ;
C) chauffage entre 75°C et 90°C pendant 5 à 30 minutes ;
D) refroidissement jusqu'à atteindre une température d'environ 40°C ;

E) ensemencement des ferments, optionnellement ajout de transglutaminase ;

F) optionnellement, coagulation ;

G) décaillage optionnel suivi d'un moulage ;

H) acidification par voie fermentaire pendant 7 à 20h à environ 30°C, jusqu'à atteindre un pH compris entre 5,2 et 4,5 ;

I) optionnellement, traitement thermique ;

J) démoulage ;

K) optionnellement, pulvérisation des ferments d'affinage ;

L) optionnellement, salage à sec ;

M) optionnellement, affinage ;

N) conservation.

Figure 1

Figure 2

Figure 3

Figure 4

Figure 5

Figure 6

## Intensité Globale *

| | |
|---|---|
| Concurrent V | 4.4 |
| Concurrent R | 3.9 |
| Concurrent L | 3.9 |
| Concurrent N | 3.8 |
| Concurrent B | 3.6 |
| Exemple 2 | 3.0 |
| Exemple 4 | 2.9 |
| Exemple 5 | 2.6 |

## Laitier *

| | |
|---|---|
| Exemple 5 | 1.9 |
| Exemple 4 | 1.6 |
| Exemple 2 | 1.2 |
| Concurrent N | 0.4 |
| Concurrent B | 0.4 |
| Concurrent V | 0.1 |
| Concurrent R | 0.0 |
| Concurrent L | 0.0 |

## Fromager Lipolysé *

| | |
|---|---|
| Concurrent V | 3.6 |
| Concurrent L | 3.4 |
| Concurrent R | 3.1 |
| Concurrent N | 2.8 |
| Concurrent B | 2.8 |
| Exemple 4 | 1.8 |
| Exemple 5 | 1.4 |
| Exemple 2 | 0.9 |

## Fermenté Levuré *

| | |
|---|---|
| Concurrent V | 3.2 |
| Concurrent N | 2.5 |
| Concurrent R | 1.8 |
| Concurrent L | 1.0 |
| Concurrent B | 0.9 |
| Exemple 2 | 0.2 |
| Exemple 5 | 0.0 |
| Exemple 4 | 0.0 |

## Affiné *

| | |
|---|---|
| Concurrent B | 3.4 |
| Concurrent L | 2.5 |
| Concurrent N | 2.2 |
| Concurrent V | 2.1 |
| Concurrent R | 2.1 |
| Exemple 4 | 0.8 |
| Exemple 2 | 0.8 |
| Exemple 5 | 0.6 |

## Acide *

| | |
|---|---|
| Concurrent V | 3.6 |
| Concurrent R | 3.2 |
| Concurrent L | 3.0 |
| Concurrent N | 1.8 |
| Concurrent B | 1.2 |
| Exemple 4 | 0.8 |
| Exemple 5 | 0.6 |
| Exemple 2 | 0.5 |

Figure 7

21

## RÉFÉRENCES CITÉES DANS LA DESCRIPTION

### Documents brevets cités dans la description

- EP 3603407 A, Barbieri
- WO 20201281172 A1
- EP 2731451 A

### Littérature non-brevet citée dans la description

- **BACHMAN, H.P.** Cheese analogues : a review. *International Dairy Journal,* 2001, vol. 11, 505-515
- **MARIE LAFORÊT.** *Incroyable mais VEGAN,* 2019
- **SPINNLER H. E. ; CORRIEU G.** Automatic method to quantify starter activity based on pH measurement. *Journal of Dairy Research,* 1989, vol. 56, 755-764
- **D MACDOUGALL.** *Colour in Food: Improving Quality,* 2002